# EUROPÄISCHE PATENTSCHRIFT

(11) **EP 1 388 811 B1**
(45) Veröffentlichungstag und Bekanntmachung des Hinweises auf die Patenterteilung: **25.08.2010**
(21) Anmeldenummer: 03405508.7
(22) Anmeldetag: 07.07.2003
(51) Int. Cl.: G06K 19/077

(54) **Verfahren und Funktionserweiterungsmodul zur nachträglichen Funktionserweiterung einer Chipkarte, sowie Chipkarte mit dem Funktionserweiterungsmodul**
Method and module for expanding the function of a chip card, and card having such a module
Procédé et module d'extension des fonctions pour l'extension a posteriori des fonctions d'une carte à puce monie d'un tel module d'extension.

(30) Priorität: 05.07.2002 CH 11912002
(43) Veröffentlichungstag der Anmeldung: 11.02.2004
(73) Patentinhaber: Huber, Christof, 7270 Davos-Platz (CH)
(72) Erfinder: Huber, Christof, 7270 Davos-Platz (CH)
(74) Vertreter: Hasler, Erich

(56) Entgegenhaltungen:
- EP-A- 1 022 645
- WO-A-00/14678
- US-A- 5 969 333

## Beschreibung

Die vorliegende Erfindung betrifft ein Verfahren und ein Funktionserweiterungsmodul zur nachträglichen Funktionserweiterung einer Chipkarte, sowie Chipkarte mit dem Funktionserweiterungsmodul.

### Stand der Technik

In Mobilfunknetzen wie GSM, UMTS wird zur Authentisierung und Identifikation am Netzwerk eine SIM Karte (Subscriber Identity Module) verwendet. Die SIM Karte ist eine Chipkarte, auf welcher der Schlüssel sowie die Algorithmen zur Authentisierung am Mobilfunk Netzwerk gespeichert sind. Weiter sind in einem Speicher Benutzerdaten wie z.B. das persönliche Telefonbuch auf der SIM Karte abgelegt. Ausserdem verfügt die SIM Karte beispielsweise Speicher für SMS-Nachrichten. Der Zugang zu diesen Daten ist mittels einem PIN Code (Personal Identification Number) geschützt.

Die jüngere (zweite) Generation der SIM Karten kann nebst der oben genannten Funktionalität noch weitere Funktionen für Zusatzdienste enthalten. Eine speziell entwickelte Schnittstelle zwischen Mobiltelefon und der SIM Karte, das so genannte SIM Applikation Toolkit erlaubt es, auf der SIM Karte Anwendungen zu speichern, welche das Mobiltelefon, insbesondere Display und Tastatur steuern können. Damit wird eine Reihe von Anwendungen möglich, welche sich durch eine hohe Bedienerfreundlichkeit und verschlüsselten Datentransfer auszeichnen. Dazu zählen Anwendungen wie die digitale Signatur, Zahlung via Mobiltelefon und VPN (Virtual Private Network) Authentisierung. Durch die starke Verbreitung der Mobilfunktelefone ist diese Technologie sehr attraktiv.

Dieser Ansatz hat jedoch einen wesentlichen Nachteil: Die SIM Karte ist in der Autorität des Mobilfunknetzbetreibers. Dies gilt auch für die Schlüssel der kryptographischen Funktionen. Der Umstand, dass sich die Funktionen für den Netzzugang und die externen Anwendungen auf der selben Karte befinden, hat sich als grosses Hindernis für die rasche Verbreitung der externen Anwendungen herausgestellt. So müsste eine Bank, welche eine Zahllösung via Mobiltelefon anbieten will, mit einer Vielzahl von Mobilfunknetzbetreibern Verträge abschliessen, damit die Zusatzfunktionen in der SIM-Karte des Netzbetreibers integriert würden. Ein weiteres Hindernis sind die Kosten der neuen SIM Karten, welche vom Netzwerkbetreiber einheitlich erneuert werden müssen, um die neue Funktionalität zu unterstützen. Die breite und damit für alle Parteien vorteilhafte Umsetzung und Nutzung oben beschriebener externer Anwendungen würde daher die Zusammenarbeit möglichst aller Mobilfunknetzbetreiber erfordern. Dies ist jedoch in der Praxis kaum zu erreichen.

Die den nächsten Stand der Technik darstellende EP-A-1 022 645 offenbart einen Kartenadapter, um eine Karte eines zweiten Verbindungsstandards mit einem Anschluss eines Karteneinschubs eines ersten Verbindungsstandards zu verbinden. Der Adapter hat einen ersten Verbinder eines ersten Standards, welcher in den Verbinder eines Karteneinschubs passt, einen zweiten Verbinder eines zweiten Standards und einen Signalumwandlungsschaltkreis, um das Signal des ersten Verbindungsstandards in ein kompatibles Signal des zweiten Verbindungsstandards umzuwandeln. Dieser Schaltkreis kann rein eine hardwaremässige Verbindung zwischen den Verbindungspins des ersten Standards mit denjenigen des zweiten Standards herstellen oder eine Signalverarbeitungsschaltung aufweisen, um das Signalformat des ersten Standards in jenes des zweiten Standards umzuwandeln und vice versa. Der Adapter besitzt eine Gehäuse, in welchem eine Aussparung zur Aufnahme der Karte des zweiten Verbindungsstandards ausgebildet und die Verbinder des ersten und zweiten Standards angeordnet sind. Die Aussparung hat eine Karteneinschuböffnung, welche sich rechwinklig zur Einführrichtung des Adapters öffnet. Dies hat den Vorteil, dass die Karte nicht unabsichtlich herausgezogen werden kann.

Die WO 00/14678 offenbart eine Hülle für eine IC-Karte mit zwei flexiblen Laschen, zwischen welchen ein Raum zur Aufnahme der IC-Karte definiert ist. In einer Lasche ist ein Fenster ausgebildet als Zugang zu den Kontakten der IC-Karte. Ausserdem ist eine Tastatur auf einer der Laschen graphisch dargestellt, um die IC-Karte für zusätzliche, vorbestimmte Aufgaben, wie z.B. zum Erfassen der Antworten eines Benutzers während eines TV-Spiels, einsetzen zu können. Gemäss WO 00/14678 kann die Hülle mit der IC-Karte in einen schlitzförmigen Aufnahmeraum einer universellen Fernsteuerung für ein Fernsehgerät eingeführt und die Tastatur der Fernsteuerung dazu benutzt werden, um Daten, z.B. Antworten eines Benutzers während eines TV-Spiels, im Speicher der IC-Karte abzuspeichern. Bei der beschriebenen Anwendung wird die Funktionalität der IC-Karte nicht erweitert, sondern es wird lediglich der vorhandene Speicher der IC-Karte zum Abspeichern von Informationen verwendet.

Die US 5,696,333 bezieht sich auf ein Datenerfassungssystem für einen Kartenleser, um Zahlungsdaten eines Zahlterminals in Gestalt eines Kartenlesers zu erfassen. Das Datenerfassungssystem erlaubt es, Daten über eine serielle Schnittstelle zu erfassen, in einem Speicher zwischenzuspeichern und später über eine parallele Schnittstelle auf einen Computer zu übertragen.

### Aufgabe

Es ist deshalb Aufgabe der vorliegenden Erfindung, die eingangs erwähnten Nachteile zu beheben. Insbesondere soll ein Verfahren und eine Lösung vorgeschlagen werden, mit welchen SIM Toolkit Anwendungen unabhängig vom Mobilfunknetzbetreiber implementiert werden können. Ziel ist es, SIM (Subscriber Identity Module) Karten basierende Anwendungen von der Abhängigkeit des Mobilfunknetzbetreibers loszulösen.

### Beschreibung

Erfindungsgemäss wird das Ziel durch ein Verfahren realisiert, bei welchem ein Funktionserweiterungsmodul mit zu den Kontaktstellen des ersten Chip entsprechenden ersten und zweiten Kontaktstellen je einer ersten und zweiten Art auf der Chip-Karte angeordnet wird, dessen erste Kontaktstellen mit den entsprechenden Kontaktstellen des ersten Chip verbunden und die zweiten Kontaktstellen des Funktionserweiterungsmoduls als Schnittstelle zu einem externen Gerät verwendet werden. Die eingehenden Daten werden dahingehend analysiert, ob die Daten für den Chip der Chipkarte oder das Funktionserweiterungsmodul bestimmt sind und entsprechend entweder dem ersten Chip oder dem Funktionserweiterungsmodul zugeleitet. Im Unterschied zu dem in der IT (Information Technology) -Branche eingeschlagenen Weg, weitere Applikationen in den auf den SIM Karten bereits vorhandenen Chips zu integrieren, sieht die vorliegende Erfindung die externe Auftrennung der SIM Funktionalität vor. Drittanwendungsabhängige Funktionalität wird von der Funktionalität des Netzzugangs getrennt und in einem externen Funktionserweiterungsmodul integriert, welches so gestaltet ist, dass es mit geringem Aufwand vor die SIM Karte geschaltet werden kann. Die erfindungsgemässe Lösung hat den Vorteil, dass zur Implementierung einer Drittanwendung keine Zusammenarbeit mit dem Mobilfunkbetreiber notwendig ist, da bestehende Chipkarten nachträglich mit neuen Funktionalitäten ausgestattet werden können. Ausserdem kann die Drittanwendung in beliebigen Mobilfunknetzen betrieben werden, was eine breite Marktabdeckung ermöglicht. Grundsätzlich können die Funktionen des Erweiterungsmoduls als elektronische Schaltung oder softwaremässig als Programm realisiert sein.

Im Unterschied zum eingangs beschriebenen Stand der Technik ist das Funktionserweiterungsmodul kein Interface, welches die Daten eines bestimmten Schnittstellenstandards in diejenigen eines anderen Schnittstellenstandards umwandelt. Im Gegenteil: Die Daten werden durch das Funktionserweiterungsmodul unverändert an den ersten Chip weitergeleitet, sofern die Daten für diesen bestimmt sind. Sind die Daten hingegen für das Funktionserweiterungsmodul bestimmt, so werden diese im Funktionserweiterungsmodul verarbeitet.

Vorteilhaft werden die ersten und zweiten Kontaktstellen auf den entsprechenden Kontaktstellen der SIM Karte übereinander angeordnet. Dies hat den Vorteil, dass geräteseitig keine Anpassungen vorgenommen werden müssen, da die Kontaktstellen der extern erweiterten Chipkarte sich unverändert am gleichen Ort befinden. Zweckmässigerweise werden das Funktionserweiterungsmodul und die ersten und zweiten Kontaktstellen an einem Support so ausgebildet, dass die ersten und zweiten Kontaktstellen, durch eine elektrisch isolierende Schicht getrennt, einander an gegenüberliegenden Seiten der isolierenden Schicht direkt gegenüber liegen. Dies ermöglicht eine schnelle Kontaktierung mit dem ersten Chip, ohne dass ein Eingriff in den ersten Chip nötig ist. Eine vorteilhafte Ausführung sieht vor, dass der Support eine Plastikfolie ist, welche auf der Seite der ersten Kontaktstellen mindestens teilweise mit einem Klebemittel versehen wird. Dies hat den Vorteil, dass der Erweiterungschip einfach auf die SIM Karte aufgeklebt werden kann. Es ist ferner denkbar, in der SIM Karte eine Aussparung auszustanzen und das Funktionserweiterungsmodul in der Aussparung anzuordnen.

Ein Funktionserweiterungsmodul für die nachträgliche Funktionserweiterung einer bestehenden Chipkarte besitzt einen ersten Chip, insbesondere eine Chipkarte für Mobiltelefone (SIM-Karte), mit
- zu den Kontaktstellen eines ersten Chips entsprechenden Kontaktstellen, die so ausgebildet sind, dass das Funktionserweiterungsmodul vor den ersten Chip schaltbar ist, sodass ein- und ausgehende Datenströme durch das Funktionserweiterungsmodul geleitet sind, und
- mindestens einem im Funktionserweiterungsmodul vorhandenen oder geladenen Programm oder eine Applikation. Das erfindungsgemässe Funktionserweiterungsmodul hat den Vorteil, dass dieses von einem beliebigen Leistungsanbieter bereitgestellt und mit einer SIM-Karte eines beliebigen Mobilfunknetzbetreibers kombiniert werden kann. Die Erfindung sieht vor, die Drittanwendung auf einem weiteren (Smartcard-) Chip, welcher Teil des Funktionserweiterungsmoduls ist, zu integrieren. Dabei wird lediglich in die Kommunikationsschnittstelle zwischen SIM Karte und Mobiltelefon eingegriffen, indem das Funktionserweiterungsmodul in Serie zwischen SIM Karte und Mobiltelefon angeordnet wird. Sämtliche Daten, welche mit der Drittanwendung in Beziehung stehen, werden vorzugsweise durch eine Mediationseinheit resp. ein Schruttstellerunodul zum zweiten Chip umgeleitet. Die Mediationseinheit prüft die eingehenden Daten oder Codes dahingehend, ob das Programm des Leistungsanbieters angesprochen werden soll oder nicht. Ist dies der Fall, so werden die Daten so lange auf den (Smartcard-) Chip umgeleitet, bis die gewünschte Funktionalität nicht mehr gebraucht oder als beendet erklärt wird. Die Funktionalität der SIM Karte des Netzbetreibers wird durch das Funktionserweiterungsmodul nicht beeinflusst. In besonders vorteilhafter Ausführung wird das Funktionserweiterungsmodul mechanisch in die vorhandene SIM Karte integriert, wodurch eine mit allen Mobiltelefonen kompatible Lösung gebildet ist.

Zweckmässigerweise ist das Funktionserweiterungsmodul auf einem Support angeordnet und hat erste Kontaktstellen zur Verbindung mit entsprechenden Kontaktstellen eines ersten Chips, dessen Funktionsumfang erweitert werden soll, und hat weiter zweite Kontaktstellen zur Verbindung mit den entsprechenden Kontaktstellen eines elektronischen Geräts, z.B. Mobiltelefons. Das Funktionserweiterungsmodul hat also im wesentlichen die gleiche Schnittstelle wie der erste Chip, allerdings im Doppel. Die ersten und zweiten Kontaktstellen können an gegenüberliegenden Seiten des Supports in identischer Weise ausgebildet sein. Diese hat den Vorteil, dass der Support als zusätzliche Lage auf die mit einer weiteren Funktion zu erweiternde Chipkarte aufgebracht werden kann. Folglich ist keine hardwaremässige Modifikation der Schnittstelle z.B. des Mobiltelefons, in welchem die Chipkarte Aufnahme findet, nötig. Zweckmässigerweise ist der Support eine Plastikfolie, und die ersten und zweiten Kontaktstellen sind einander direkt gegenüberliegend an gegenüberliegenden Seiten der Plastikfolie angeordnet. Diese können sehr flach ausgebildet sein. Vorzugsweise sind die ersten und zweiten Kontaktstellen in Abstand vom zweiten Chip auf dem Support vorgesehen. Dadurch ist ein sehr flaches Design des Funktionserweiterungsmoduls möglich.

Es ist denkbar, dass die gesamte Funktionalität, d.h. sowohl Mediationseinheit als auch zweiter Chip, in einem einzelnen Chip zu integrieren. Die Mediationseinheit hat die Funktion, die Datenströme zu kontrollieren und zu steuern und zum richtigen Chip resp. der im Chip gespeicherten Applikation zu leiten. Wenn im eingehenden Datenstrom ein bestimmter Code, z.B. als eine SMS-Nachricht gesendet, entdeckt wird, wird der nachfolgende. Datenstrom zum zweiten Chip, welcher ein Smartcard-Chip sein kann, umgeleitet. Denkbar ist, dass das Funktionserweiterungsmodul mehrere zweite Chips besitzt.

Gegenstand der vorliegenden Erfindung ist auch eine Chipkarte mit einem auf einem Trägermaterial, z.B. einer Plastikkarte, angeordneten ersten Chip sowie mit dem Chip in Verbindung stehenden, einerseits der Stromversorgung des Chips dienenden Kontaktstellen einer ersten Art und andererseits dem Datentransfer dienenden Kontaktstellen einer zweiten Art, sowie ein Funktionserweiterungsmodul mit zu den Kontaktstellen des ersten Chip entsprechenden ersten und zweiten Kontaktstellen je einer ersten und zweiten Art, wobei das Funktionserweiterungsmodul auf der Chipkarte angeordnet ist, dessen erste Kontaktstellen mit den entsprechenden Kontaktstellen des ersten Chip - die Stromversorgung des Funktionserweiterungsmoduls und den Datentransfer zwischen dem ersten Chip und dem Funktionserweiterungsmodul ermöglichend - verbunden sind. Diese Chipkarte kann mittels des Funktionserweiterungsmoduls mit beliebigen externen Drittanwendungen ausgestattet werden, ohne dass dazu der Mobilfunknetzbetreiber seine Autorisation geben oder eingreifen müsste. Ausserdem muss zu einer gewünschten Funktionserweiterung keine neue SIM-Karte ausgegeben werden.

Wenn in der Chipkarte eine Aussparung für das Funktionserweiterungsmodul vorgesehen ist, wird die Dicke der bestehenden Chipkarte nicht oder nur unwesentlich beeinflusst. Der zweite Chip kann lösbar mit der Chipkarte verbunden sein, sodass das Funktionserweiterungsmodul jederzeit auswechselbar ist. Denkbar ist auch, das Funktionserweiterungsmodul fest, d.h. unlösbar, mit der vorhandenen Chipkarte zu verbinden.

Gemäss einer besonders bevorzugten Ausführungsform ist die Chipkarte eine bekannte, in Mobiltelefonen einsetzbare SIM-Karte, und im Funktionserweiterungsmodul ist eine Anwendung, insbesondere eine Anwendung eines bestimmten Dienstleistungsanbieters, z.B. eine Anwendung zur Durchführung des bargeldlosen Zahlungsverkehrs mit einer bestimmten Bank, abgespeichert.

Die Erfindung wird anhand der Figuren näher erläutert.

Die Figuren zeigen:
- Fig. 1: schematisch den Aufbau und Funktionsweise der erfindungsgemässen Lösung;
- Fig. 2: eine Ausführungsform der erfindungsgemässen Lösung in Explosionsdarstellung.

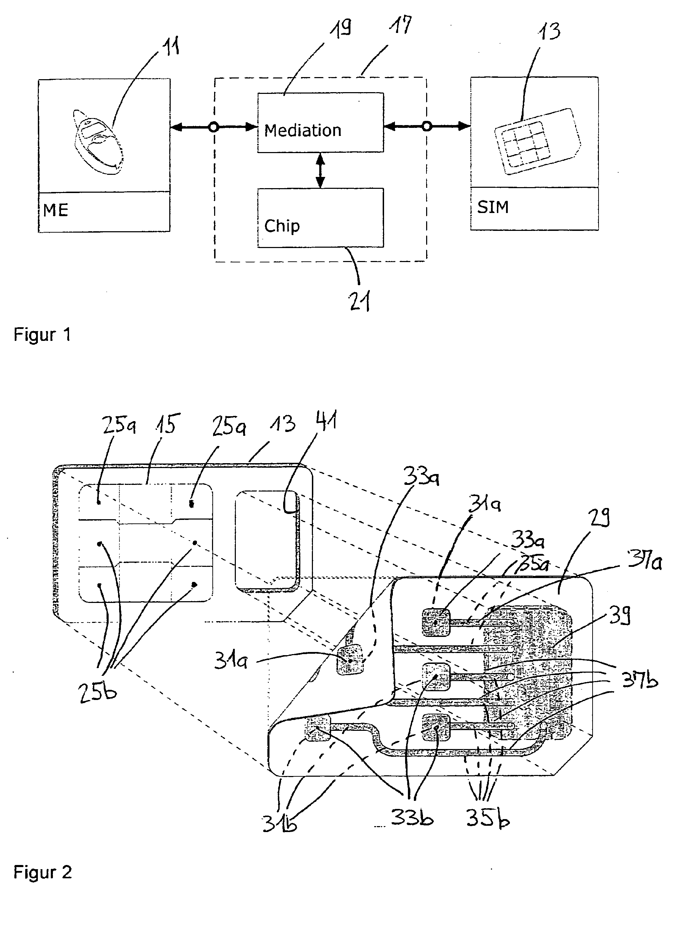

In Fig. 1 ist mit der Bezugsziffer 11 ein Mobiltelefon bezeichnet, welches in bekannter Art eine SIM-Karte 13, auf welcher ein erster Chip 15 integriert ist, aufnehmen kann (Figur 2). Die erfindungsgemässe Lösung ist dadurch charakterisiert, dass zwischen das Mobiltelefon 11 und der SIM-Karte 13 ein externes Funktionserweiterungsmodul 17 geschalten ist. Das Funktionserweiterungsmodul 17 besitzt in einer bevorzugten Ausführungsform eine Mediationseinheit 19 und mindestens einen zweiten Chip 21, welcher als Smartcard-Chip ausgebildet sein kann. Der zweite Chip 21 dient der Aufnahme einer Drittanwendung eines beliebigen Leistungsanbieters. Die Mediationseinheit 19 steht sowohl mit der SIM-Karte 13 als auch mit dem zweiten Chip 21 in Verbindung. Sie koordiniert die Kommunikation sowie gegebenenfalls die elektrische Stromversorgung zwischen dem Mobiltelefon 11, der SIM-Karte 13 und dem zweiten Chip 21.

Die in den heutigen Mobiltelefonen eingesetzte SIM-Karte ist als flache Kunststoffplättchen ausgebildet, in welches ein Smartcard-Chip eingebettet ist. Auf einer Seite des als Trägermaterial dienenden Kunststoffplättchens sind an der Oberfläche sechs nebeneinander angeordnete Kontaktstellen 25a,25b vorgesehen, durch welche einerseits die Stromversorgung der SIM Karte 13 (Kontaktstellen 25a einer ersten Art) und andererseits der Datenaustausch (Kontaktstellen 25b einer zweiten Art) erfolgt (Fig. 2).

Fig. 2 stellt eine erfindungsgemässe mechanische Umsetzung dar, wobei der zweite Chip (Erweiterungs-Chip) 21 und die Mediationseinheit 19 zusammen eine Einheit 39 bilden. Chip 21 und Mediationseinheit 19 können zusammen in ein Kunststoffgehäuse oder eine Kunststofffolie verpackt oder eingelassen sein. Auf der bestehenden SIM Karte 13, dessen Support aus Kunststoff besteht, ist eine Aussparung 41 eingestanzt. In dieser Aussparung 41 wird die aus Erweiterungs-Chip 21 und die Mediationseinheit 19 bestehende Einheit 39 eingesetzt. Die galvanische Verbindung der Elemente 11,13 und 39 ist vorzugsweise in eine Kontaktierungsfolie 29 integriert.

Die Kontaktierungsfolie besitzt an gegenüberliegenden Seiten erste Kontaktstellen 31a,31b und zweite Kontaktstellen 33a,33b, über welche einerseits die Stromversorgung und andererseits der Datenaustausch erfolgt. Über die Kontaktstellen 33a, 31a und Verbindungsleitungen 37a,35a können bei eingesetztem Funktionserweiterungsmodul sowohl die Einheit 39 als auch die SIM-Karte 13 mit Strom versorgt werden. Über die Kontaktstellen 33b,31b und die Datenleitungen 37b,35b hingegen erfolgt der Datenverkehr zwischen einem externen Gerät, wie z.B. einem Mobiltelefon, und dem Funktionserweiterungsmodul 17 resp. der SIM-Karte 13.

Die ersten und zweiten Kontaktstellen 31a,31b resp. 33a,33b sind einander direkt gegenüberliegend auf gegenüberliegenden Seiten des Supports 29 aufgebracht. Die Kontaktstellen 31a,31b resp. 33a,33b besitzen das selbe Layout wie die Kontaktstellen 25a,25b des zu erweiternden Chip. Elektrisch leitende Verbindungen zwischen den beiden Chips 13 und 19 lässt sich so ohne Mühe herstellen, indem die ersten Kontaktstellen 31a,31b an die Kontaktstellen 25a,25b der SIM-Karte gelegt werden. Die Verbindungsleitungen 35a,35b verbinden die ersten Kontaktstellen 31a,31b mit der Mediationeinheit 19 (unterbrochene Linien beziehen sich auf die in der Fig. 2 nur teilweise sichtbare Unterseite der Karte), resp. die Verbindungsleitungen 37a,37b die Mediationeinheit 19 mit den zweiten Kontaktstellen 31,31b.

Im normalen Betrieb des Mobiltelefons liest das Telefon 11 Daten aus der SIM Karte 13 aus. Die Authentisierung auf dem Mobilfunknetz wird ebenfalls durch einen speziellen Vorgang mit der SIM Karte 13 durchgeführt. In diesem Zustand detektiert die Mediationseinheit 19 die SIM Funktionalität und leitet die Kommunikation vom Telefon 11 an die SIM Karte 13 weiter.

Wird nun durch das Telefon 11 ein Code, z.B. in Form einer SMS Nachricht, empfangen, welche an die Drittanwendung adressiert ist, so übernimmt die Mediationseinheit 19 dessen Umleitung auf den Applikationschip 21. Allfällige Interaktionen der im Applikationschip 21 gespeicherten Drittanwendung mit dem Mobiltelefon 11 werden von der Mediationseinheit 19 an das Mobiltelefon 11 weitergeleitet. Die elektrische Energie wird vorzugsweise jeweils dem aktiven Chip 15 oder 21 zugeführt, um sicherzustellen, dass die Anforderungen der massgebenden Normen erfüllt werden.

Zur nachträglichen Funktionserweiterung einer Chipkarte, insbesondere einer solchen für Mobiltelefone (SIM-Karte), mit einer Schnittstelle zur Kommunikation mit einem externen elektronischen Gerät wird ein Funktionserweiterungsmodul vor die Chipkarte, resp. zwischen Chipkarte und Mobiltelefonie, geschaltet resp. mit dieser verbunden, sodass die Datenströme durch das Funktionserweiterungsmodul fliessen. Das Funktionserweiterungsmodul hat erste und zweite Kontaktstellen. Die ersten Kontaktstellen dienen der Herstellung einer Verbindung mit der bestehenden Chipkarte, und die zweiten Kontaktstellen des Funktionserweiterungsmoduls werden als Schnittstelle zu einem externen Gerät verwendet. Das Funktionserweiterungsmodul kann eine Mediationseinheit aufweisen, welche die Datenströme kontrolliert und steuert. Je nach eingehendem Befehlssatz können die Daten zwischen den zweiten Kontaktstellen und der bestehende Chipkarte oder dem auf der Funktionserweiterungsmodul enthaltenden Chip stattfinden.

Es ist grundsätzlich denkbar, SIM-Karten mit separaten Anschlussstellen für Funktionserweiterungsmodule neben den bestehenden Kontaktstellen bereitzustellen.

Weiter könnte die Mediationseinheit im bestehenden Chip der mit dem Funktionserweiterungsmodul zu erweiternden Chipkarte bereits integriert sein. Es könnte also der erste Chip oder das Funktionserweiterungsmodul eine Mediationseinheit besitzen, welche mit dem ersten Chip und dem Funktionserweiterungsmodul in Verbindung steht.

Im Funktionserweiterungsmodul können Anwendungen, welche dem bargeldlosen Zahlungsverkehr, der Zugangskontrolle, Datenzugang- oder Datenaustausch dienen. gespeichert sein. Somit können bestehende der digitalen Mobilkommunikation dienenden SIM-Karten nachträglich - unabhängig vom Mobilkommunikationsanbieter - mit zusätzlichen Funktionen des Bank-/Telefoniewesens, der Zutritts- und Identifikationskontrolle, insbesondere für Electronic Commerce ausgestattet werden.

### Legende:

- 11: Mobiltelefon
- 13: SIM-Karte
- 15: erster Chip auf SIM-Karte
- 17: Funktionserweiterungsmdul
- 19: Mediationseinheit
- 21: zweite Chip (Applikations-Chip)
- 23: Kontaktseite der SIM-Karte
- 25a,25b: erste und zweite Kontaktstellen der SIM-Karte
- 29: Support mit Kontaktierungsfolie
- 31a,31b: erste Kontaktstellen des Erweiterungsmoduls zur Verbindung mit der SIM-Karte
- 33a,33b: zweite Kontaktstellen des Erweiterungsmoduls für Kontaktierung mit einem externen elektronischen Gerät
- 35,37: Verbindungsleitungen zwischen
- 39: Einheit aus Mediationseinheit und zweitem Chip
- 41: Aussparung

## Patentansprüche

1. Verfahren zur nachträglichen Funktionserweiterung einer Chipkarte, insbesondere einer Chipkarte (13) für Mobiltelefone (SIM-Karte), welche mindestens einen auf einem Trägermaterial angeordneten ersten Chip (15) und mit dem Chip in Verbindung stehende, einerseits der Stromversorgung des Chips dienende Kontaktstellen einer erster Art (25a) und andererseits dem Datentransfer dienende Kontaktstellen einer zweiter Art (25b) besitzt, welche Kontaktstellen (25a, 25b) eine Schnittstelle mit einem elektronischen Gerät, z.B. Mobiltelefon (11), definieren,
durch ein Funktionserweiterungsmodul (17) mit zu den Kontaktstellen (25a, 25b) des ersten Chip (15) entsprechenden ersten Kontaktstellen (31a, 31b) einer ersten und zweiten Art, die mit den entsprechenden Kontaktstellen (25a, 25b) des ersten Chip (15) verbunden sind und zweiten Kontaktstellen (33a, 33b) einer ersten und zweiten Art die als Schnittstelle zu einem externen Gerät (11) verwendet werden, und wobei die eingehenden Daten dahingehend analysiert werden, ob die Daten für den Chip (15) der Chipkarte (13) oder das Funktionserweiterungsmodul (17) bestimmt sind, und die Daten entsprechend entweder dem ersten Chip (15) oder dem Funktionserweiterungsmodul (17) zugeleitet werden
**dadurch gekennzeichnet,**
**dass** das Funktionserweiterungsmodul (17) auf der Chipkarte (13) angeordnet wird.

2. Verfahren nach Anspruch 1, **dadurch gekennzeichnet, dass** die ersten (31a, 31b) und zweiten (33a, 33b), voneinander isoliert angeordneten Kontaktstellen des Funktionserweiterungsmoduls (17) auf den entsprechenden Kontaktstellen (25a, 25b) des ersten Chip (15) übereinander angeordnet werden.

3. Verfahren nach Anspruch 1 oder 2, **dadurch gekennzeichnet, dass** das Funktionserweiterungsmodul (17) und die ersten (31a, 31b) und zweiten (33a, 33b) Kontaktstellen an einem Support (29) so ausgebildet werden, dass die ersten (31a, 31b) und zweiten (33a, 33b) Kontaktstellen, durch eine elektrisch isolierende Schicht getrennt, einander direkt gegenüber liegen.

4. Verfahren nach einem der Ansprüche 1 bis 3, **dadurch gekennzeichnet, dass** in der Chipkarte (13) eine Aussparung (41) ausgestanzt und das Funktionserweiterungsmodul (17) in der Aussparung (41) angeordnet wird.

5. Verfahren nach einem der Ansprüche 1 bis 4, **dadurch gekennzeichnet, dass** im Funktionserweiterungsmodul (17) vorgängig eine bestimmte Anwendung (Programm), vorzugsweise eine Anwendung zur Durchführung des bargeldlosen Zahlungsverkehrs, abgespeichert wird.

6. Chipkarte (13) mit einem auf einem Trägermaterial, z.B. einer Plastikkarte, angeordneten ersten Chip (15) sowie mit dem Chip in Verbindung stehenden, einerseits der Stromversorgung des Chips (15) dienenden Kontaktstellen einer ersten Art (25a) und andererseits dem Datentransfer dienenden Kontaktstellen einer zweiten Art (25b) sowie mit einem Funktionserweiterungsmodul (17) mit zu den Kontaktstellen (25a, 25b) des ersten Chip (15) entsprechenden ersten Kontaktstellen (31a,31b) einer esten und zweiten Art, die mit den entsprechenden Kontaktstellen (25a, 25b) des ersten Chip (15) verbunden sind und zweiten Kontaktstellen (33a, 33b) einer ersten und zweiten Art, die die Schnittstelle zu einem externen Gerät (11) definieren
**dadurch gekennzeichnet,**
**dass** das Funktionserweiterungsmodul (17) auf der Chipkarte angeordnet ist.

7. Chipkarte (13) nach Anspruch 6, **dadurch gekennzeichnet, dass** die ersten (31a, 31b) und zweiten Kontaktstellen (33a, 33b) des Funktionserweiterungsmoduls (17) durch eine elektrisch nicht leitfähige Lage (29), z.B. Kunststofffolie, getrennt übereinander angeordnet sind.

8. Chipkarte (13) nach Anspruch 6 oder 7, **dadurch gekennzeichnet, dass** in der Chipkarte (13) eine Aussparung (41) vorgesehen ist, in welcher das Funktionserweiterungsmodul (17) angeordnet ist.

9. Chipkarte (13) nach einem der Ansprüche 6 bis 8, **dadurch gekennzeichnet, dass** die Chipkarte (13) eine bekannte, in Mobiltelefonen einsetzbare SIM-Karte ist und im Funktionserweiterungsmodul (17) eine Anwendung, insbesondere eine Anwendung eines bestimmten Dienstleistungsanbieters, z.B. eine Anwendung zur Durchführung des bargeldlosen Zahlungsverkehrs mit einer bestimmten Bank, abgespeichert ist.

10. Chipkarte (13) nach einem der Ansprüche 6 bis 9, **dadurch gekennzeichnet, dass** das Funktionserweiterungsmodul (17) lösbar, insbesondere mit einer Selbstklebefolie, mit der Chipkarte (13) verbunden ist.

11. Chipkarte (13) nach einem der Ansprüche 6 bis 10, **dadurch gekennzeichnet, dass** das Funktionserweiterungsmodul (17) eine Mediationseinheit (19) und einen zweiten Chip (21) besitzt, welche miteinander in Verbindung stehen, und dass die Mediationseinheit (19) mit Mitteln ausgestattet ist, welche- je nach eingehendem Befehlssatz - den Datenverkehr von und nach dem ersten (15) oder zweiten Chip (21) leiten.

12. Chipkarte (13) nach einem der Ansprüche 6 bis 11, **dadurch gekennzeichnet, dass** das Funktionserweiterungsmodul (17) auf einem Support (29) angeordnet ist und die ersten Kontaktstellen (31a, 31b) hat zur Verbindung mit entsprechenden Kontaktstellen (25a, 25b) eines ersten Chips (15) vorzugsweise einer SIM-Karte, dessen Funktionsumfang erweitert werden soll, und weiter die zweiten Kontaktstellen (33a, 33b) hat zur Verbindung mit den entsprechenden Kontaktstellen eines elektronischen Geräts, z.B. Mobiltelefons (11).

13. Chipkarte (13) nach Anspruch 12, **dadurch gekennzeichnet, dass** die ersten (31a, 31b) und zweiten Kontaktstellen (33a, 33b) an gegenüberliegenden Seiten des Supports (29) ausgebildet sind.

14. Chipkarte (13) nach Anspruch 12 oder 13, **dadurch gekennzeichnet, dass** der Support (29) eine Plastikfolie ist und die ersten (31a, 31b) und zweiten Kontaktstellen (33a, 33b) einander direkt gegenüberliegend sind.

15. Chipkarte (13) nach einem der Ansprüche 6 bis 14, **dadurch gekennzeichnet, dass** die ersten (31a, 31b) und zweiten Kontaktstellen (33a, 33b) in Abstand vom zweiten Chip (21) auf dem Support (29) vorgesehen sind.

16. Chipkarte (13) nach einem der Ansprüche 6 bis 15, **dadurch gekennzeichnet, dass** der zweite Chip (21) und die Mediationseinheit (19) in einem Chip (39) integriert sind.

## Claims

1. A method for the later functional extension of functions of a chip card, in particular of a chip card (13) for mobile telephones (SIM-card), which has at least one first chip (15) arranged on a carrier material, and contact locations of a first type (25a) which on the one hand serve the electricity supply of the chip, and contact locations of a second type (25b) which on the other hand serve for the data transfer, said contact locations (25a, 25b) being in connection with the chip and defining an interface with an electronic apparatus, e.g. mobile telephone (11) by way of a function extension module (17) with first contact locations (31, 31 b) of a first and second type which correspond to the contact locations (25a, 25b) of the first chip (15) and are connected to the respective contact locations (25a, 25b) of the first chip (15), and with second contact locations (33a, 33b) of a first and second type which are used as an interface to an external apparatus (11) and wherein the incoming data is analysed to the extent as to whether the data is envisaged for the chip (15) of the chip card (13) or for the function extension module (17), and the data is accordingly led either to the first chip (15) or to the function extension module (17), **characterised in that** the function extension module (17) is arranged on the chip card (13).

2. A method according to claim 1, **characterised in that** the first (31a, 31b) and second (33a, 33b) contact locations of the function extension module (17), which are arranged insulated from one another, are arranged above one another on the respective contact locations (25a, 25b) of the first chip (15).

3. A method according to claim 1 or 2, **characterised in that** the function extension module (17) and the first (31a, 31b) and second (33a, 33b) contact locations are formed on a support (29) such that the first (31a, 31b) and the second (33a, 33b) contact locations, separated by an electrically insulating layer, lie directly above one another.

4. A method according to one of the claims 1 to 3, **characterised in that** a recess (41) is punched in the chip card (13), and the function extension module (17) is arranged in the recess (41).

5. A method according to one of the claims 1 to 4, **characterised in that** a certain application (program), preferably an application for carrying out the cashless payment, is previously stored in the function extension module (17).

6. A chip card (13) with a first chip (15) arranged on a carrier material, e.g. a plastic card, as well as, in connection with the chip, contact locations of a first type (25a) which on the one hand serve the electricity supply of the chip (15), and contact locations of a second type (25b) which on the other hand serve for the data transfer, as well as with a function extension module (17) with first contact locations (31, 31b) of a first and second type, which correspond to the contact locations (25a, 25b) of the first chip (15) and are connected to the respective contact locations (25a, 25b) of the first chip (15), and with second contact locations (33a, 33b) of a first and second type, which define an interface to an external apparatus (11),
**characterised in that**
the function extension module (17) is arranged on the chip card.

7. A chip card (13) according to claim 6, **characterised in that** the first (31a, 31b) and the second contact locations (33a, 33b) of the function extension module (17) are arranged above one another in a separated manner by way of an electrically non-conductive layer (29), e.g. of plastic.

8. A chip card (13) according to claim 6 or 7, **characterised in that** a recess (41) is provided in the chip card (13), in which the function extension module (17) is arranged.

9. A chip card (13) according to one of the claims 6 to 8, **characterised in that** the chip card (13) is a known SIM-card which may be inserted in mobile telephones, and an application, in particular an application of a certain service provider, e.g. an application for carrying out the cashless payment with a certain bank, is stored in the function extension module (17).

10. A chip card (13) according to one of the claims 6 to 9, **characterised in that** the function extension module (17) is releasably connected to the chip card (13), in particular with a self-sticking film.

11. A chip card (13) according to one of the claims 6 to 10, **characterised in that** the function extension module (17) has a mediation unit (19) and a second chip (21), which are in connection with one another, and that the mediation unit (19) is provided with means which, depending on the incoming command set, lead the data traffic from and to the first (15) or second chip (21).

12. A chip card (13) according to one of the claims 6 to 11, **characterised in that** the function extension module (17) is arranged on a support (29), and the first contact locations (31a, 31 b) are for the connection to respective contact locations (25a, 25b) of a first chip (15), preferably of a SIM card, whose functional scope is to be extended, and further, the second contact locations (33a, 33b) are for the connection to the respective contact locations of an electronic apparatus, e.g. mobile telephone (11).

13. A chip card (13) according to claim 12, **characterised in that** the first (31a, 31b) and the second contact locations (33a, 33b) are formed on opposite sides of the support (29).

14. A chip card (13) according to claim 12 or 13, **characterised in that** the support (29) is a plastic film and the first (31a, 31b) and second contact locations (33a, 33b) lie directly opposite one another.

15. A chip card (13) according to one of the claims 6 to 14, **characterised in that** the first (31a, 31b) and the second contact locations (33a, 33b) are provided on the support (29) at a distance to the second chip (21).

16. A chip card according to one of the claims 6 to 15, **characterised in that** the second chip (21) and the mediation unit (19) are integrated in a chip (39).

## Revendications

1. Procédé pour l'extension ultérieure de fonctions d'une carte à puce, en particulier d'une carte à puce (13) pour téléphones portables (carte SIM) qui possède au moins une première puce (15) placée sur un matériau de support et des endroits de contact d'un premier type (25a) qui servent d'une part à l'alimentation en courant de la puce et d'autre part des endroits de contacts d'un second type (25b) qui servent au transfert de données, endroits de contact qui sont en relation avec la puce, lesquels endroits de contact (25a, 25b) définissent une interface avec un appareil électronique, par exemple un téléphone portable (11),
par un module d'extension de fonctions (17) avec des premiers endroits de contact (31a, 31 b) d'un premier et d'un second type qui sont reliés aux endroits de contact correspondants (25a, 25b) de la première puce (15) et avec des seconds endroits de contact (33a, 33b) d'un premier et d'un second type qui sont utilisés comme interface avec un appareil externe (11) et
les données qui entrent étant analysées pour savoir si les données sont destinées à la puce (15) de la carte à puce (13) ou au module d'extension de fonctions (17) et les données étant amenées de manière correspondante soit à la première puce (15), soit au module d'extension de fonctions (17).

2. Procédé selon la revendication 1, **caractérisé en ce que** les premiers endroits de contact (31 a, 31 b) et les seconds endroits de contact (33a, 33b) du module d'extension de fonctions (17), placés isolés les uns des autres, sont placés superposés sur les endroits de contact correspondants (25a, 25b) de la première puce (15).

3. Procédé selon la revendication 1 ou 2, **caractérisé en ce que** le module d'extension de fonctions (17) et les premiers endroits de contact (31 a, 31 b) et les seconds endroits de contact (33a, 33b) sont configurés sur un support (29) de telle manière que les premiers endroits de contact (31a, 31 b) et les seconds endroits de contact (33a, 33b) sont situés directement en face les uns des autres en étant séparés par une couche isolante électriquement.

4. Procédé selon l'une des revendications 1 à 3, **caractérisé en ce qu'**un évidement (41) est découpé dans la carte à puce (13) et le module d'extension de fonctions (17) est placé dans l'évidement (41).

5. Procédé selon l'une des revendications 1 à 4, **caractérisé en ce qu'**une application précise (programme) est mémorisée dans le module d'extension de fonctions (17), de préférence une application pour exécuter des paiements sans espèces.

6. Carte à puce (13) avec une première puce (15) placée sur un matériau de support, par exemple une carte en plastique, ainsi qu'avec des endroits de contact d'un premier type (25a) qui sont en relation avec la puce, qui servent d'une part à l'alimentation en courant de la puce (15) et d'autre avec des endroits de contact d'un second type (25b) qui servent au transfert de données ainsi qu'avec un
module d'extension de fonctions (17) avec des premiers endroits de contact (31a, 31 b) et avec des seconds endroits de contact (33a, 33b) d'un premier et d'un second type correspondant aux endroits de contact (25a, 25b) de la première puce (15), qui définissent une interface avec un appareil externe (11) et qui sont reliés aux endroits de contact correspondants (25a, 25b) de la première puce (15), **caractérisée en ce**
**que** le module d'extension de fonctions (17) est placé sur la carte à puce.

7. Carte à puce (13) selon la revendication 6, **caractérisée en ce que** les premiers endroits de contact (31 a, 31 b) et les seconds endroits de contact (33a, 33b) du module d'extension de fonctions (17) sont placés superposés en étant séparés par une couche qui ne conduit pas l'électricité (29), par exemple par une couche en matière synthétique.

8. Carte à puce (13) selon la revendication 6 ou 7, **caractérisée en ce qu'**il est prévu un évidement (41) dans la carte à puce (13) dans lequel le module d'extension de fonctions (17) est placé.

9. Carte à puce (13) selon l'une des revendications 6 à 8, **caractérisée en ce que** la carte à puce (13) est une carte SIM qui peut être mise en place dans des téléphones portables et qu'une application est mémorisée dans le module d'extension de fonctions (17), en particulier une application d'un prestataire de services précis, par exemple une application pour exécuter des paiements sans espèces avec une banque précise.

10. Carte à puce (13) selon l'une des revendications 6 à 9, **caractérisée en ce que** le module d'extension de fonctions (17) est relié de manière amovible à la carte à puce (13), en particulier avec une feuille autocollante.

11. Carte à puce (13) selon l'une des revendications 6 à 10, **caractérisée en ce que** le module d'extension de fonctions (17) possède une unité de médiation (19) et une seconde puce (21) qui sont en relation l'une avec l'autre et que l'unité de médiation (19) est équipée de moyens qui, selon le jeu d'instructions entrant, guident le flux de données du et vers la première (15) ou seconde puce (21).

12. Carte à puce (13) selon l'une des revendications 6 à 11, **caractérisée en ce que** le module d'extension de fonctions (17) est placé sur un support (29) et qui a des premiers endroits de contact (31 a, 31 b) pour la liaison avec des endroits de contact correspondants (25a, 25b) d'une première puce (15), de préférence d'une carte SIM, dont le volume de fonctions doit être étendu et qui a, de plus, des seconds endroits de contact (33a, 33b) pour la liaison avec des endroits de contact correspondants d'un appareil électronique, par exemple d'un téléphone portable (11).

13. Carte à puce (13) selon la revendication 12, **caractérisée en ce que** les premiers endroits de contact (31a, 31 b) et les seconds endroits de contact (33a, 33b) sont configurés sur des côtés opposés du support (29).

14. Carte à puce (13) selon la revendication 12 ou 13, **caractérisée en ce que** le support (29) est une feuille plastique et les premiers endroits de contact (31a, 31 b) et les seconds endroits de contact (33a, 33b) sont situés directement en face les uns des autres.

15. Carte à puce (13) selon l'une des revendications 6 à 14, **caractérisée en ce que** les premiers endroits de contact (31 a, 31 b) et les seconds endroits de contact (33a, 33b) sont prévus à un écart de la seconde puce (21) sur le support (29).

16. Carte à puce (13) selon l'une des revendications 6 à 15, **caractérisée en ce que** la seconde puce (21) et l'unité de médiation (19) sont intégrées dans une puce (39).
